# EUROPEAN PATENT APPLICATION

(11) **EP 4 199 380 A1**
(43) Date of publication of application: **21.06.2023**
(21) Application number: 21275190.3
(22) Date of filing: 17.12.2021
(51) Int. Cl.: H04B 13/02

(54) **OPTICAL UNDERWATER DATA TRANSMISSION**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

In some examples, an apparatus for optical underwater data transmission comprises an optical transmitter configured to generate an optical signal for a short range underwater optical communications channel, wherein the optical transmitter comprises a source of electromagnetic radiation configured to generate an optical signal with a selected wavelength.

## Description

### FIELD

The present invention relates to optical underwater data transmission.

### BACKGROUND

Communication between devices in an underwater environment can be implemented using, e.g., acoustic or optical communication channels, in which a modulated acoustic or optical signal is transmitted from one party to another in order to convey data. Signal degradation due to noise, interference and attenuation due to the participating medium can be problematic and, in general, acoustic and optical signals are rapidly attenuated in water, primarily due scattering and absorption. This is especially the case in seawater, which is more conductive than fresh water, and which therefore produces higher attenuation. Accordingly, signals for underwater communication are typically transmitted at higher power in order to offset the unfavourable environmental conditions, thereby helping to ensure that a transmitted signal reaches its intended recipient.

### SUMMARY

According to a first aspect of the present disclosure, there is provided an apparatus for optical underwater data transmission, comprising an optical transmitter configured to generate an optical signal for a short range underwater optical communications channel, wherein the optical transmitter comprises a source of electromagnetic radiation configured to generate an optical signal with a selected wavelength.

In an implementation of the first aspect, the source of electromagnetic radiation can generate an optical signal with a wavelength selected in the near infra-red or short wavelength infra-red regions of the electromagnetic spectrum. The source of electromagnetic radiation can be tuneable, whereby to vary the wavelength of the optical signal within a range between around 900-3000nm. Alternatively, or in addition, multiple sources can be used, each selected to cover (possibly overlapping) regions of the electromagnetic spectrum. A sensor can be used to generate a measure representing turbidity of a participating medium. A controller can select, on the basis the measure representing turbidity of the participating medium, at least one of the wavelength for the optical signal and an output power for the source of electromagnetic radiation. In an example, the selected wavelength can comprise a relatively high-loss wavelength for a participating medium comprising, e.g., seawater. That is, the attenuation of the selected wavelength can be relatively higher than the attenuation of an, e.g., relatively shorter wavelength. In an example, the optical transmitter can further comprise a collimating structure configured to collimate the optical signal.

According to a second aspect of the present disclosure, there is provided a method of optical underwater communication using a short range underwater optical communications channel, the method comprising selecting a wavelength in the near infra-red or short wavelength infra-red regions of the electromagnetic spectrum, modulating data to generate an optical signal at the selected wavelength, and transmitting the optical signal.

In an implementation of the second aspect, a measure representing turbidity of prevailing conditions for the optical communications channel can be generated, and the wavelength can be selected on the basis of the generated measure. The optical signal can be collimated. The method can further comprise receiving the transmitted optical signal at a receiver, and filtering the received signal. The method can further comprise filtering environmental background optical noise from the received signal using an optical bandpass filter. The method can further comprise tuning the pass band of the optical bandpass filter on the basis of the underwater depth of the receiver.

According to a third aspect of the present disclosure, there is provided a system for optical underwater communication, comprising a transmitting apparatus, and a receiving apparatus, wherein the transmitting apparatus can comprise an optical transmitter configured to generate an optical signal with a wavelength selected in the near infra-red or short wavelength infra-red regions of the electromagnetic spectrum, the optical signal for transmission to the receiving apparatus over a short range underwater optical communications channel between the transmitting apparatus and the receiving apparatus. The system can further comprise a sensor configured to generate a measure representing turbidity of a participating medium of the short range underwater optical communications channel, and a controller of the transmitting apparatus configured to select, on the basis the measure representing turbidity, the wavelength for the optical signal.

### BRIEF DESCRIPTION OF THE FIGURES

Embodiments of the invention will now be described by way of example only with reference to the figures, in which:
Figure 1 is a schematic representation of an apparatus for optical underwater data transmission according to an example;
Figure 2 is a schematic representation of a system according to an example; and
Figure 3 is a flow chart of a method according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

As noted above, signals for underwater communication can be attenuated quite significantly due to the prevailing conditions. To offset this, acoustic signals, for example, can be transmitted at low frequencies in order to extend the distance over which they can be sent. However, apart from the fact that this results in a relatively low bandwidth for such signals, the signals are also relatively easy to detect. Accordingly, a communication session can be easily intercepted and/or the source of the acoustic signal located. Underwater optical communications use low loss wavelengths in order to enable transmission over relatively long distances. However, as with acoustic transmissions, this makes them susceptible to observation and source location by, e.g., hostile observers.

According to an example, a typical scenario in which an underwater communication channel is implemented can see an unmanned underwater vehicle (UUV) undertake near approaches to assets it is to communicate with. For example, a UUV may communicate at a relatively short distance with distributed sensors, backhaul nodes of a communication network, other UUVs or submarines and so on. As communication between a UUV and such assets only occurs over a relatively short distance, a short-range underwater optical communications channel is provided. In an example, an optical signal can be generated by a source of electromagnetic radiation of an optical transmitter. A wavelength of the optical signal can be highly attenuated in a participating medium, such as seawater for example. As such, an optical signal can penetrate the participating medium over a desired distance, but an observer, such as a hostile observer for example, would need to be very close to the optical transmitter (and/or the asset to which the optical signal is directed) to detect the communications channel. In an example, a wavelength of the optical signal can be selected from the near infra-red or short wavelength infra-red regions. For example, a wavelength between the range 800-3000nm can be selected. For example, a wavelength for an optical signal can be selected at 900nm, 1200nm, 1450nm or 1950nm. A choice of wavelength selected can depend on the local environmental conditions and/or communication distance. In an example, a tuneable source of electromagnetic radiation can be used to enable a wavelength of the optical signal to be varied.

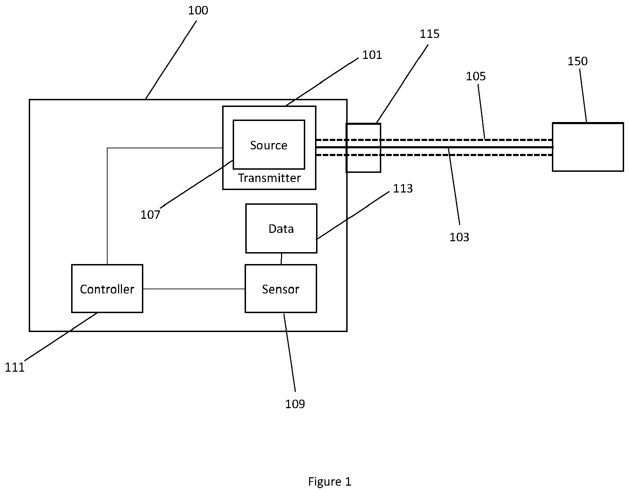

Figure 1 is a schematic representation of an apparatus for optical underwater data transmission according to an example. In the example of figure 1, an optical transmitter 101 is configured to generate an optical signal 103 for a short range underwater optical communications channel 105. The optical communications channel 105 can be used to implement communication between a first apparatus 100 and a second apparatus 150. The first and/or second apparatus 100 can be, e.g., a UUV. The first apparatus 100 can be a UUV and the second apparatus 150 can be a distributed sensor, backhaul node of a communication network, or submarine and so on.

According to an example, the optical transmitter 101 comprises a source of electromagnetic radiation 107 configured to generate the optical signal 103. The wavelength of the optical signal can be selected from, e.g., the near infra-red or short wavelength infra-red regions of the electromagnetic spectrum. The source of electromagnetic radiation can be tuneable, whereby to vary the wavelength of the optical signal within a range between around, e.g., 900-3000nm. In an example, the source of electromagnetic radiation can comprise one or more laser diodes and/or LEDs for example. For example, the range noted above can be implemented using multiple sources, each one of which being configured or selected to generate an optical signal with a wavelength within the range noted above.

Apparatus 100 can comprise a sensor 109 configured to generate a measure representing turbidity of a participating medium. In an example, a participating medium is the medium within which the optical signal 103 is transmitted. Accordingly, the participating medium is likely to be the medium within which the apparatus 100 is disposed, such as seawater for example, although it is possible that the apparatus 100 may be disposed outside of the participating medium but so positioned/configured to enable the transmitter 101 to transmit the optical signal 103 within the participating medium.

In the example of figure 1, a controller 111 can select, on the basis a measure representing turbidity of the participating medium, the wavelength for the optical signal 103. That is, the sensor 109 can generate data 113 representing the turbidity of a participating medium, the data thus representing a measure of the degree to which the participating medium is cloudy/hazy. Put another way, sensor 109 can generate a measure of the degree to which the participating medium (e.g., water such as seawater) loses its transparency due to the presence of suspended particulates. In an example, sensor 109 can be a nephelometer or turbidimeter configured to measure the intensity of light scattered at 90 degrees as a beam of light passes through a sample of the participating medium.

The turbidity of the participating medium will affect the degree to which the optical signal 103 is attenuated before reaching the second apparatus 150. Accordingly, controller 111 can use the data 113 to select a wavelength for the optical signal 103 in order to mitigate any effects, such as attenuation of the optical signal 103, that may occur as a result of the turbidity of the participating medium. For example, a relatively turbid participating medium will attenuate the optical signal 103 to a higher degree than one which is relatively less turbid since attenuation of the optical signal 103 is the loss of intensity due to intrinsic absorption by the participating medium, which will be composed of water and dissolved impurities, organic matter and inorganic particulates. According to an example, the controller 111 can select a relatively less lossy wavelength (e.g., 900nm) for an optical signal in a participating medium that is turbid (e.g., with a measure of turbidity from sensor 109 that is above a predetermined threshold value). Conversely, controller 111 can select a relatively more lossy wavelength (e.g., 1950nm) for an optical signal in a participating medium that is less turbid (e.g., with a measure of turbidity from sensor 109 that is below a predetermined threshold value). Various degrees of threshold value can be provided between these mapping to appropriate wavelength values, such as 1200nm and 1450nm and so on. Controller 111 can also be used to select an output power for the source 107 for a selected wavelength, thereby enabling, e.g., intensity of the optical signal 103 to be varied. Similarly to the selection of wavelength, output power can be selected on the basis of data 113, with higher intensities for the optical signal mapped to more turbid conditions and so on.

In an example, apparatus 100 can comprise a collimating structure 115 configured to collimate the optical signal 103. For example, a lens or lens structure may be used to focus the optical signal. The collimating structure 115 can be fixed in nature, whereby to provide a fixed degree of collimation for an optical signal 103, or can be tuneable in order to enable the degree of collimation to be varied as desired (e.g., depending on the environmental conditions and/or distance from apparatus 150). The collimating structure 115 can comprise a lens assembly with one or more fixed and/or movable lenses.

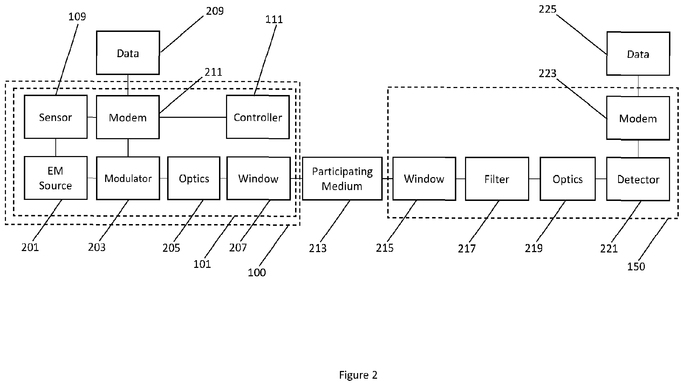

Figure 2 is a schematic representation of a system for optical underwater communication according to an example. The system comprises a transmitting apparatus 100, such as a UUV for example, that can transmit an optical signal. An optical transmitter 101 of the apparatus 100 can encode data to be transmitted 209 using a modem 211, to form a bit stream which is modulated onto an optical channel 105 using modulator 203 in the form of the optical signal 103 for transmission to a receiving apparatus 150. Modulation using modulator 203 can comprise, e.g., pulse position modulation, intensity modulation, frequency modulation, phase modulation. In an example, modem 211 can add forward error correcting data/bits to the bit stream. The optical signal 103 can be conditioned using optics 205, such as by using lenses to collimate the optical signal 103 as described above. In some examples, a diverging optical signal may be desirable (e.g., if the position of a receiving apparatus 150 is not known), in which case collimation may not occur. A window 207, which is transparent to the optical signal 103, can be provided as an interface between the apparatus 100 and the participating medium 213 through which the optical signal 103 is transmitted by the apparatus 100.

Apparatus 150, which is a receiving apparatus in the example of figure 2, comprises a window 215 acting as an interface between the apparatus 150 and the participating medium 213 through which the optical signal 103 is received. As above, window 215 is transparent to the optical signal 103. The received optical signal 103 can be conditioned using optics 219 in order to, e.g., focus the optical signal 103 onto a detector 221 configured to convert the modulated optical signal into an electrical signal. Modem 223 recovers data 225 from the electrical signal generated by the detector 221. A filter 217, such as a band pass filter, can be used to, e.g., restrict ingress of background light to the apparatus 150, thereby increasing the signal to noise ratio and decreasing transmission errors. In an example, the pass band of the optical bandpass filter can be tuned or modified on the basis of the underwater depth of the receiver in recognition of the fact that undesirable environmental noise in the form of background light can reduce in intensity with depth. In an example, multiple band pass filters can be used, each one corresponding to a selected wavelength for an optical signal.

Accordingly, with reference to figure 2, the transmitting apparatus 100 of the system generates an optical signal with a wavelength that can be selected in the near infra-red or short wave infra-red region of the electromagnetic spectrum. The optical signal is transmitted to the receiving apparatus 150 over a short range underwater optical communications channel 105.

Apparatus 100 can comprise a sensor 109 to generate a measure representing turbidity of the participating medium 213. As described above, controller 111 can select, on the basis the measure representing turbidity, the wavelength for the optical signal 103.

Data 209 may be provided to apparatus 100 from a remote source (not shown in figure 2) or may be stored (e.g., prestored) in a storage device of the apparatus 100 or generated using one or more, e.g., sensors (not shown) of the apparatus 100. Similarly, decoded data 225 may be stored in a storage device of apparatus 150 and/or transmitted using a transmitter (not shown) to a remote device. That is, data 209, 225 can be stored on its respective apparatus and/or provided/transmitted to a remote device.

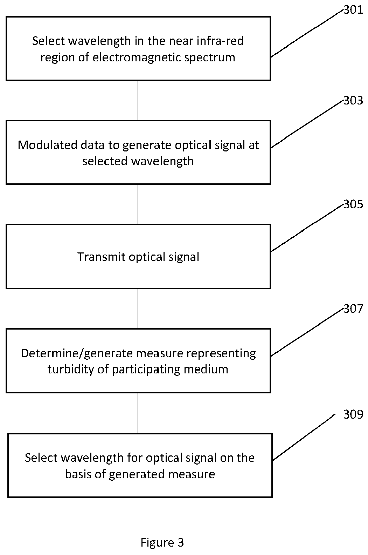

Figure 3 is a flow diagram of a method according to an example. In the example of figure 3, a method of optical underwater communication using a short range underwater optical communications channel comprises selecting a wavelength in the near infra-red or short wavelength infra-red regions of the electromagnetic spectrum at block 301. For example, a wavelength from the range 800-3000nm may be selected. In block 303, data is modulated to generate an optical signal at the selected wavelength. That is, a bit stream for example can be modulated onto an optical channel 105 in the form of the optical signal 103 using modulator 203. In block 305, the optical signal is transmitted.

A measure representing the turbidity of prevailing conditions for the optical communications channel (i.e., of the participating medium within which the optical signal is transmitted) can be determined in block 307, and in block 309, the wavelength for the optical signal can be selected on the basis of the generated measure.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

## Claims

1. Apparatus for optical underwater data transmission, comprising:
an optical transmitter configured to generate an optical signal for a short range underwater optical communications channel, wherein the optical transmitter comprises a source of electromagnetic radiation configured to generate an optical signal with a selected wavelength.

2. The apparatus as claimed in claim 1, wherein the source of electromagnetic radiation is configured to generate an optical signal with a wavelength selected in the near infra-red or short wavelength infra-red regions of the electromagnetic spectrum.

3. The apparatus as claimed in claim 1 or 2, wherein the source of electromagnetic radiation is tuneable, whereby to vary the wavelength of the optical signal within a range between around 900-3000nm.

4. The apparatus as claimed in claim 1 or 2, further comprising a sensor configured to generate a measure representing turbidity of a participating medium.

5. The apparatus as claimed in claim 4, further comprising a controller configured to:
select, on the basis the measure representing turbidity of the participating medium, at least one of the wavelength for the optical signal and an output power for the source of electromagnetic radiation.

6. The apparatus as claimed in any preceding claim, wherein the selected wavelength is a relatively high-loss wavelength for a participating medium comprising seawater.

7. The apparatus as claimed in any preceding claim, wherein the optical transmitter further comprises:
a collimating structure configured to collimate the optical signal.

8. A method of optical underwater communication using a short range underwater optical communications channel, the method comprising:
selecting a wavelength in the near infra-red or short wavelength infra-red regions of the electromagnetic spectrum;
modulating data to generate an optical signal at the selected wavelength; and
transmitting the optical signal.

9. The method as claimed in claim 8, further comprising:
generating a measure representing turbidity of prevailing conditions for the optical communications channel; and
selecting the wavelength on the basis of the generated measure.

10. The method as claimed in claim 8 or 9, further comprising:
collimating the optical signal.

11. The method as claimed in any of claims 8 to 10, further comprising:
receiving the transmitted optical signal at a receiver; and
filtering the received signal.

12. The method as claimed in claim 11, further comprising:
filtering environmental background optical noise from the received signal using an optical bandpass filter.

13. The method as claimed in claim 12, further comprising:
tuning the pass band of the optical bandpass filter on the basis of the underwater depth of the receiver.

14. A system for optical underwater communication, the system comprising:
a transmitting apparatus; and
a receiving apparatus;
wherein the transmitting apparatus comprises an optical transmitter configured to generate an optical signal with a wavelength selected in the near infra-red or short wavelength infra-red regions of the electromagnetic spectrum, the optical signal for transmission to the receiving apparatus over a short range underwater optical communications channel between the transmitting apparatus and the receiving apparatus.

15. The system as claimed in claim 14, further comprising:
a sensor configured to generate a measure representing turbidity of a participating medium of the short range underwater optical communications channel; and
a controller of the transmitting apparatus configured to select, on the basis the measure representing turbidity, the wavelength for the optical signal.
